# DEMANDE DE BREVET EUROPEEN

(11) **EP 1 526 315 A1**
(43) Date de publication de la demande: **27.04.2005**
(21) Numéro de dépôt: 04300694.9
(22) Date de dépôt: 20.10.2004
(51) Int. Cl.: F16L 23/032, F16L 23/028

(54) **Ensemble de raccordement de canalisation avec bride de liaison brise-jet**

(30) Priorité: 20.10.2003 FR 0312364
(71) Demandeur: Ades Technologies, 42100 Saint Etienne (FR)
(72) Inventeur: Fleury, Michel, F-42000 Saint-Etienne (FR); Modrin, Jean-Louis, F-42260 Pommiers (FR)
(74) Mandataire: Dupuis, François

(57) **Abrégé**

Cet ensemble est remarquable en ce que le canal (C) défini entre les brides (10-11) par des formes spécifiques (10a-11a) en regard de celles-ci après rapprochement est établi dans une configuration irrégulière à plusieurs pans successifs (C1-C2-C3) permettant d'avoir des effets complémentaires brise-jet, en vue d'obtenir une pression équilibrée du fluide en phase d'écoulement hors ensemble et le fluide se trouvant dans la canalisation.

## Description

L'invention se rattache au secteur technique des brides de liaison pour canalisations utilisées notamment avec la distribution de fluide ou matière dangereuse à déflagrations.

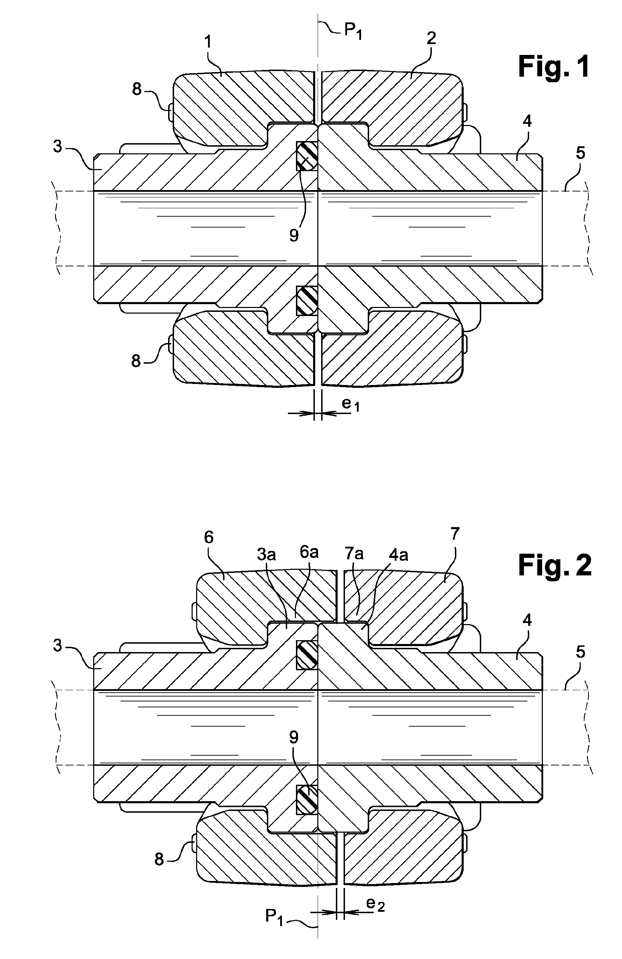

Le demandeur fabrique depuis de nombreuses années de telles brides de liaison et on a représenté figures 1 et 2 au titre de l'art antérieur, ces dernières pour bien faire apparaître l'intérêt de l'invention.

Selon la figure 1, on a représenté un ensemble de deux brides de liaison (1-2) s'adaptant sur des raccords (3-4) autour d'une canalisation (5). Une garniture d'étanchéité (9) disposée sur le chant d'extrémité de l'un des raccords vient en appui sur l'autre selon un plan de joint vertical perpendiculaire à l'axe longitudinal de l'ensemble accouplé. La liaison des deux brides s'effectue à l'aide de boulonnages (8) classiques. Dans cette mise en oeuvre, la position des deux brides se trouve telle qu'elles définissent un espace (e1) entre elles dans le prolongement du plan de joint (P1) des deux raccords. Un tel ensemble ne prévoit pas de fonction brise-jet et dans ces conditions, lorsqu'il y a une fuite d'étanchéité, le liquide transporté, huile par exemple, est projeté avec toute la puissance nécessaire hors de l'ensemble constitué avec une pression maximum, avec des risques d'accidents conséquents.

Pour remédier à cet inconvénient, il a été proposé figure 2 une évolution de ces brides avec la fonction brise-jet. Dans cette situation, les deux raccords restent inchangés, mais les deux brides rapportées sont différenciées, de telle sorte que la longueur de la première bride (6) soit supérieure à la longueur de la seconde bride (7) dans des portées d'appui (6a-7a) différentes. Ainsi, la portée (6a) vient non seulement en appui sur la partie épaulée (3a) formant tête du premier raccord, mais aussi et partiellement sur la partie épaulée (4a) du second raccord (4). L'espace (e2) en regard des deux brides est alors décalé par rapport au plan de joint (P1) des deux raccords, et on obtient la fonction brise-jet. Il y a donc une réduction de la pression. S'il y a une rupture accidentelle du joint, le jet d'huile ou autre fluide sous pression est cassé en venant en contact avec la face interne (6b) de la bride (6). Cette mise en oeuvre a constitué une avancée considérable en matière de sécurité.

La démarche du demandeur a toutefois été d'améliorer et d'optimiser la conception des brides de liaison brise-jet en particulier pour la conservation des propriétés mécaniques des brides, par une recherche d'une pression équilibrée améliorée en sortie de tels ensembles.

Les recherches du demandeur ont ainsi abouti à une nouvelle conception de bride brise-jet.

Selon une première caractéristique de l'invention, l'ensemble de raccordement de canalisations avec brides brise-jet du type mettant en oeuvre un plan de joint décalé entre les parties en regard des brides et le plan de joint des raccords, est remarquable en ce que le canal défini entre les brides par les formes spécifiques en regard de celles-ci après rapprochement est établi dans une configuration irrégulière à plusieurs pans successifs permettant d'avoir des effets complémentaires brise-jet, en vue d'obtenir une pression équilibrée du fluide en phase d'écoulement hors ensemble et le fluide se trouvant dans la canalisation.

Ces caractéristiques et d'autres encore ressortiront bien de la suite de la description.

Pour fixer l'objet de l'invention illustré d'une manière non limitative aux figures des dessins où :
- La figure 1 est une vue d'un ensemble de raccordement de canalisation avec brides de liaison sans fonction brise-jet selon l'art antérieur.
- La figure 2 est une vue d'un ensemble de raccordement de canalisation avec brides de liaison avec fonction brise-jet selon l'art antérieur.
- La figure 3 est une vue d'un ensemble de raccordement de canalisation avec brides de liaison avec fonction brise-jet selon l'invention.
- La figure 4 est une vue en perspective illustrant les deux brides selon l'invention disposées en regard pour assurer la fonction recherchée selon l'invention.

Afin de rendre plus concret l'objet de l'invention, on le décrit maintenant d'une manière non limitative illustrée aux figures des dessins.

L'ensemble de raccordement de canalisation est référencé dans son ensemble par (E) et comprend deux raccords (3-4) connus en soi autour d'une canalisation (5) avec joint d'étanchéité (9) disposé sur le chant d'extrémité de l'un des raccords.

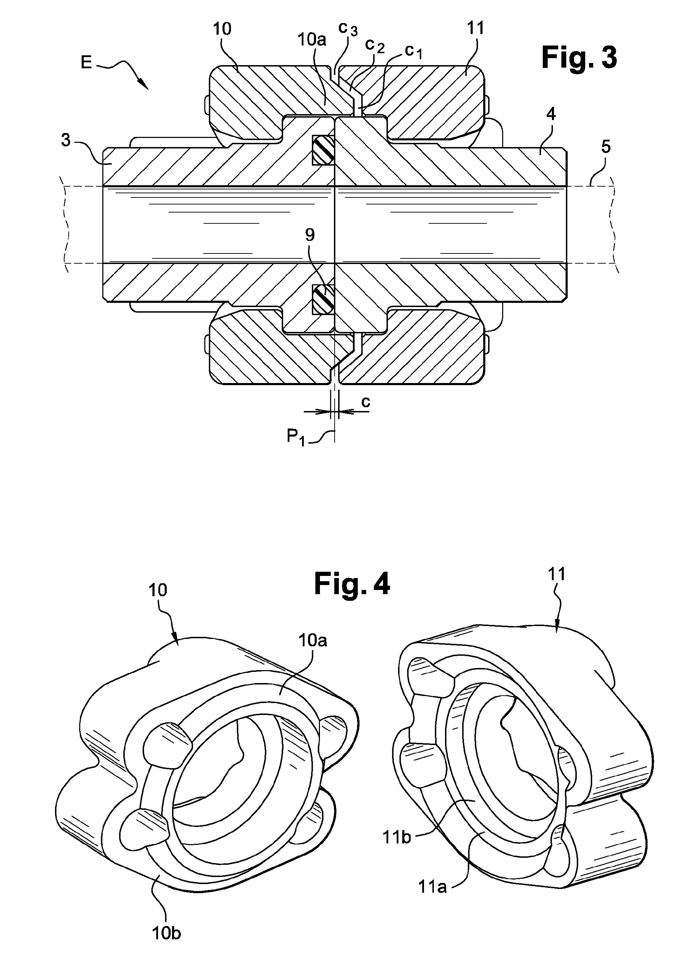

Selon l'invention, l'ensemble (E) comprend deux brides de liaison (10-11) qui sont agencées à leur extrémité en regard avec des formes (10a-11a) définissant après rapprochement et positionnement sur les raccords un canal (C) dont la configuration est irrégulière avec plusieurs pans successifs (C1-C2-C3) selon des angulations différentes, afin d'assurer des effets complémentaires brise-jet en vue d'obtenir une pression équilibrée du fluide en phase d'écoulement hors ensemble. Plus particulièrement, ledit canal (C) présente une configuration comme représentée figure 3 en Z, avec deux pans (C1-C3) parallèles entre eux, mais décalés, perpendiculaires à l'axe longitudinal XX de l'ensemble de raccordement, et entre lesquels est prévu un pan intermédiaire oblique (C2) de raccordement. Le pan (C1) est décalé par rapport au plan de joint (P1) des raccords (3-4). Avantageusement, le pan (C3) débordant du canal (C) se trouve dans le prolongement du plan du joint (P1) entre les raccords (3-4). En d'autres termes, les profils intérieurs des deux brides qui apparaissent figure 4 et destinés à être en regard définissent un emboîtement mâle-femelle avec un espace correspondant au canal (C). En pratique, la bride (10) présente sur sa face avant destinée à être en regard de l'autre bride (11) une forme en jupe (10b) qui déborde du premier raccord sur le second pour assurer la première phase connue de la fonction brise-jet. La face en regard de l'autre bride (11) présente une forme femelle complémentaire par évidement central (11b), ladite bride restant en appui sur le raccord (4) qui lui est associé.

Ainsi, selon l'invention, l'optimisation donnée par la forme nouvelle des brides en vue de définir un canal non rectiligne complémentaire d'évacuation du fluide tel que de l'huile, permet de réduire encore la pression existante du fluide en cas de projection due à la rupture du joint d'étanchéité (9).

On a donné à titre d'exemple non limitatif cette configuration du canal en Z, mais d'autres formes équivalentes peuvent être proposées en restant dans le cadre de l'invention, l'essentiel étant que le canal (C) n'ait pas une forme régulière mais brisée pour casser les efforts de pression.

## Revendications

1. Ensemble de raccordement de canalisation avec brides de liaison brise-jet, du type mettant en oeuvre un plan de joint décalé entre les parties en regard des brides et le plan de joint des raccords (3-4), **caractérisé en ce que** le canal (C) défini entre les brides (10-11) par des formes spécifiques (10a-11a) en regard de celles-ci après rapprochement est établi dans une configuration irrégulière à plusieurs pans successifs (C1-C2-C3) permettant d'avoir des effets complémentaires brise-jet, en vue d'obtenir une pression équilibrée du fluide en phase d'écoulement hors ensemble et le fluide se trouvant dans la canalisation.

2. Ensemble selon la revendication 1, **caractérisé en ce que** les brides (10-11) présentent sur leurs faces en regard des jupes intérieures (10a-10b) permettant un emboîtement mâle-femelle en définissant le canal (C) dans une configuration irrégulière.

3. Ensemble selon l'une quelconque des revendications 1 et 2, **caractérisé en ce que** les formes et profils (10a-11a) des brides définissent une configuration en Z du canal (C) avec deux pans (C1-C3) parallèles entre eux, mais décalés, perpendiculaires à l'axe longitudinal XX de l'ensemble de raccordement, entre lesquels est prévu un pan intermédiaire oblique (C2) de raccordement.

4. Ensemble selon la revendication 3, **caractérisé en ce que** le pan (C1) est décalé par rapport au plan de joint (P1) des raccords (3-4).

5. Ensemble selon l'une quelconque des revendications 3 et 4, **caractérisé en ce que** le pan (C3) débordant du canal (C) se trouve dans le prolongement du plan du joint (P1) entre les raccords (3-4).

6. Ensemble selon l'une quelconque des revendications 1 à 5, **caractérisé en ce que** le canal (C) a une configuration en Z.
